# EUROPEAN PATENT APPLICATION

(11) **EP 3 974 177 A1**
(43) Date of publication of application: **30.03.2022**
(21) Application number: 20198635.3
(22) Date of filing: 28.09.2020
(51) Int. Cl.: B32B 7/12, B32B 17/10, B32B 27/08, B32B 27/12, B32B 27/22

(54) **THIN FILMS COMPRISING ETHYLENE VINYL ACETALS**

(71) Applicant: Kuraray Europe GmbH, 65795 Hattersheim (DE)
(72) Inventor: Janßen, Christian, 65795 Hattersheim am Main (DE); Haerth, Michael, 53859 Niederkassel (DE)
(74) Representative: Janßen, Christian Oliver

(57) **Abstract**

The invention is directed to interlayer films with low thickness comprising an ethylene vinyl acetal and optionally at least one plasticiser.

## Description

The invention is directed to interlayer films with a low thickness comprising an ethylene vinyl acetal and optionally at least one plasticiser.

Interlayer films comprising polyvinyl acetal are long known as adhesive layer for laminating glass, polymers or fibres. Especially plasticized polyvinyl butyral (PVB) films are widely used as adhesive layer for glass-glass laminates, e.g. for windshields in automotive use.

Said films are often used to introduce various functionalities into the windshield. For example, compounds that effectively shield from UV or IR rays can be introduced. A further functionality is the introduction of fluorophores to display information on the inside of the vehicle (so-called head-up-displays). It is also known to use an interlayer film which is non-transparent to visible light in certain regions of the windshield in order to protect the sealing or adhesives from UV radiation or to hide sensor systems from being seen from the outside of the car.

Such functionalizations are often introduced by means of thin plastic films which are used in combination with the common plasticized PVB films. For example, IR-shielding particles can be coated onto PET films as described in US 2011/00767473 and then used together with common plasticized PVB interlayer films. Is it further known to use thin non-plasticised PVB films or patches as carriers for various functionalities, e.g. printed obscuration areas or IR-shielding patches, as for example disclosed in WO 2019/038043 A1.

While these technical solutions using PET or PVB patches have certain advantages, they also have certain disadvantages. For example, PET cannot be melted directly to a glass surface and thus, needs to be sandwiched between two PVB layers in order to function as interlayer film for laminated glass.

Another disadvantage of the PVB usually used for such applications is its inherently high viscosity, which makes it difficult to extrude. The high viscosity requires high extrusion- and melt temperatures which accelerate the degradation reactions and therefore negatively influence optical (e.g. yellowness) and mechanical (e.g. tensile strength) properties. In addition, the high viscosity leads to a large pressure drop after the melting pump, which is obstructive for a high throughput.

A potential solution to decrease viscosity at extrusion temperature is to add plasticizer. However, this decreases the glass transition temperature of the PVB, which influences the stiffness and the modulus of the end-product. This loss in mechanical properties causes problems during the functionalization of the film (printing, coating, etc.).

Accordingly, there is a need for interlayer films having advantageous properties. Surprisingly, it was found that interlayer films with a low thickness comprising an ethylene vinyl acetal and optionally at least one plasticiser can solve some of the disadvantages of the films of the prior art.

Therefore, one objective of the invention is to provide interlayer films with an improved material, e.g. using a material with improved production costs or raw material costs and/or an improved environmental footprint. Another objective of the present invention is to provide interlayer films with improved characteristics like improved thermal stability, improved melting point, improved viscosity, improved water uptake profile, improved compatibility with other components, e.g. glass, PVB interlayers, fibres, pigments and/or dyes. Another objective of the present invention is to provide interlayer films with improved characteristics, e.g. an improved processibility in film making and/ transportation. Yet another objective is to provide interlayer films with a low viscosity at extrusion temperature and improved stiffness in a temperature range between 20 °C and 100 °C.

These and other objectives are surprisingly solved by the present invention.

The present invention provides an interlayer film comprising an ethylene vinyl acetal and optionally at least one plasticiser wherein the thickness of the interlayer film is from 5 to 95 µm, preferably from 10 to 75 µm, more preferably from 20 to 55 µm.

### Brief description of the drawings

Figure 1: Complex viscosity as a function of angular frequency at 190 °C
Figure 2: Storage modulus G' as a function of temperature at a frequency of 1 Hz

The ethylene vinyl acetal of the present invention can be obtained by subjecting an aldehyde to an acetalization reaction with an ethylene vinyl alcohol (EVOH). Such ethylene vinyl alcohols are known in the art and can be obtained by copolymerizing ethylene in the presence of an acidic catalyst. Furthermore, ethylene vinyl alcohols are commercially available.

Preferably, the ethylene vinyl alcohol is obtained by copolymerizing ethylene and a vinyl acetate and hydrolysing the obtained copolymer. In the hydrolysation reaction, a conventionally known alkali catalyst or an acid catalyst can be used and among them, a hydrolysation reaction using methanol as a solvent and caustic soda (NaOH) catalyst is convenient.

Although there is no particular limitation to the method for producing the ethylene vinyl acetals used in this embodiment of the present invention, they can be produced by a method in which an aldehyde is added to the ethylene vinyl alcohol solution under acidic conditions and subjected to the acetalization reaction.

The reaction product obtained after the acetalization reaction is neutralized with alkali, and then washed with water to obtain the ethylene vinyl acetal.

The catalyst for carrying out the acetalization reaction is not particularly limited, and any organic acid or inorganic acid may be used. Examples thereof include acetic acid, para toluenesulfonic acid, nitric acid, sulfuric acid, hydrochloric acid, carbonic acid, and the like.

Preferably, the interlayer film is provided with an obscuration area wherein the obscuration area is printed or coated onto at least one surface of the interlayer film or wherein the obscuration area is provided by a dye or a pigment dispersed in the interlayer film. More preferably, the obscuration area has at least one transparent area embedded in the obscuration area.

The term "obscuration area" refers to any region of the laminate having a light transmission in the visible spectrum of less than 5%. In a variant, the obscuration area may fade out towards transparency. In such variants, at least a part of the obscuration area of the laminate has a light transmission in the visible spectrum of less than 5%.

The term "obscuration area having at least one transparent area" refers to one or more region of the laminate having a reduced light transmission as defined above, with transparent areas embedded therein. The transparent areas have preferable a light transmission in the visible spectrum not less than the rest of the laminate which is not covered by an obscuration area. The transparent areas may be used as viewing areas for optical detection devices positioned behind the transparent areas in the final windshield. Optical detection devices include digital cameras, range finders, haze meters, rain sensors, target detectors, scanning laser devices (LIDAR) or related devices using electromagnetic radiation from within the UV/VIS and NIR/IR range of the spectrum.

The obscuration area may be provided by a printed or coated layer on at least one surface of the interlayer film.

As pigments, preferable carbon black, iron oxides, polyaniline, perylenes or spinel pigments are used. The pigments may be dispersed in a carrier fluid like water, alcohol or mixtures of alcohol and water. Furthermore, binders like polyvinylalcohol, polyvinylbutyral, polyvinylpyrrolidone, polyacrylates, polyurethanes or poly styrene-acrylate may be present. Such printing compositions are referred to as "printing inks" or simple "inks" hereinafter.

The printing inks can be applied via techniques that are commonly known in the printing industry such as offset printing, rotogravure printing, flexography, and screen-printing, followed usually by a drying step.

Alternatively, the pigments can be dispersed in the ethylene vinyl acetal films, e.g. a pigment is added to the ethylene vinyl acetal before or during the film production process.

The obscuration area can be completely opaque and/or in part interrupted and/or have a transition area from a completely opaque edge into the transparent area.

When printing or coating is used, the dry-film thickness of the ink/pigment layer in the obscuration area is from 1 to 50 µm. Usually the dry-film thickness is from 10 to 30 µm. High enough total dry-film thicknesses can be achieved by overlaying ink-layers through repetition of sequential printing / coating steps.

Also preferably, the obscuration area has at least one area with a transmission in the visible spectrum from 380 nm to 740 nm of less than 20%, more preferably 10% and most preferably less than 5%. Also preferably, the obscuration area has an L* value in the L,a,b system of less than 10, more preferably less than 5, even more preferably less than 2.5. The obscuration area may appear grey or black. Alternatively, they can also be coloured.

Also preferably, at least one area in the obscuration area is obscure to visible light but has a transmission for infrared radiation from 850 nm to 1200 nm of more than 70%, more preferably more than 80% and even more preferably more than 90%. Black pigments such as perylene pigments are particularly suitable for this embodiment. Perylene pigments are known with many substitution patterns, e.g. from DE 102004007382 A1, and are used as paint additive and dye for polymers. The best known representatives of this group of substances are N,N'-dimethylperylenedicarboxylic acid diimide (MPTCDI) or perylene tetracarboxylic acid dianhydride (PTCDA), which are commercially available as LUMOGEN BLACK FK 4280 and LUMOGEN BLACK FK 4281 from BASF AG.

In another embodiment according to the present invention, the interlayer film is provided with IR shielding particles wherein the IR shielding particles are printed or coated onto at least one surface of the interlayer film or wherein the IR shielding particles are dispersed in the interlayer film.

Introduction of the IR shielding particles is done in accordance with the method as described above for the obscuration area.

The IR shielding particles can be chosen from ITO, ATO, AZO, IZO, zinc antimonates, tin-doped zinc oxide, silicon-doped zinc oxide, gallium-doped zinc oxide, tungstates, such as LiWO3, NaWO3, CsWO3, lanthanum hexaboride and cerium hexaboride.

The IR shielding particles preferably have a mean diameter from 5 to 500 nm, i.e. they are so-called nanoparticles. The proportion of IR shielding particles in or on the interlayer film may be from 1 to 20 % by weight, preferably from 2 to 10 % by weight. In another embodiment according to the present invention, the interlayer film is provided with a fluorophore wherein the fluorophore is printed or coated onto at least one surface of the interlayer film or wherein the fluorophore is dispersed in the interlayer film.

Introduction of the fluorophore is done in accordance with the method as described above for the obscuration area.

The excitation of the fluorophores used according to the invention is preferably done through radiation in the non-visible range of light, such as in the wavelength range of 300-420 nm, preferably in the wavelength range of 350-400 nm and most preferably in the wavelength range of 365-385 nm. UV lasers or UV-LEDs can particularly be used as a radiation source.

The following fluorophores can be advantageously used: fluorescing inorganic nanoparticles, fluorescent dyes that are poorly soluble in the surrounding matrix, such as substituted perylenes or rylenes or derivatives of quinacridone, fluorescent dyes with ionic groups such as Tinopal CBS-X or of an ionic nature such as uranine, as well as polymeric fluorophores. Especially preferred are 2,5-dihydroxyterephthalic acid and 3-(2-quinolylmethylene)phthalimidine and they can be present in the interlayer film in an amount of from 0.001 to 5 % by weight.

In another embodiment according to the present invention, the interlayer film is provided with light scattering particles wherein the light scattering particles are printed or coated onto at least one surface of the interlayer film or wherein the light scattering particles are dispersed in the interlayer film.

Introduction of the light scattering particles is done in accordance with the method as described above for the obscuration area.

Light scattering materials known in the art can be employed. Preferably, the light scattering particles are chosen from the group consisting of TiO2, ZnO, Al2O3, ZrO2, PbSO4, BaSO4, CaCO3, glass, polymers and mixtures thereof. The light scattering particles can be used as solid or hollow beads or fibres.

Preferably, the light scattering particles are present in the interlayer film in an amount of 0.1 to 10 % by weight, more preferred 0.5 to 5 % by weight, most preferably 1 to 2.5 % by weight.

Also preferably, the light scattering particles have a median particle size D50 by volume determined by the laser diffraction method according to DIN 13320 of equal to or more than 0.001, more preferably 0.01 µm, 0.05 µm or 0.1 µm. Also preferably they are equal to or less than 10.0 µm, more preferably 5.0 µm and most preferably 1.0 µm. Preferably, the median particle size by volume determined by the laser diffraction method according to DIN 13320 is equal to or more than 0.01 µm and equal to or less than 1.0 µm.

In another embodiment according to the present invention, the interlayer film is provided with a UV absorber wherein the UV absorber is printed or coated onto at least one surface of the interlayer film or wherein the UV absorber is dispersed in the interlayer film.

Introduction of the UV absorber is done in accordance with the method as described above for the obscuration area.

The inventive interlayer films contain a UV absorber in a quantity of 0.005-5 % by weight, preferably 0.1 to 2.0, more preferably 0.2 to 1.0 and most preferably 0.1 to 0.8 % by weight, each with respect to the weight of the layer in which the UV absorbers are contained.

Low-molecular weight UV absorbers or UV absorbers with a low tendency to migrate or diffuse that are known for plasticizer-containing polyvinyl acetal films can be used as UV absorbers. In one exemplary application of the fluorescent display as a windshield of a motor vehicle, an arrangement with another layer containing fluorophores makes it possible to have the fluorophores be excited by UV radiation from the passenger compartment without the radiation actually provided for excitation already being absorbed by the UV absorber.

For example, compounds of the benzotriazole type such as, for instance, Tinuvin P, Tinuvin 328, Tinuvin 326, Tinuvin 327 or substituted phenyltriazines Tinuvin 1577 or Cyasorb 1164 can be used. Also, nanoparticles such as nano-TiO2, UV-absorbing polymers, UV absorbers that are poorly soluble in the present matrix of plasticizer and polyvinyl acetal, e.g., of the benzoxazinone type, the weakly substituted diphenyl hydroxyphenyltriazine type, UV absorbers containing ionic groups, UV absorbers chemically linked to the polyvinyl acetal, e.g., those based on benzotriazole, polymer-bound crylene or alkoxycrylene groups, particularly those with an alkoxy group in one of the phenyl rings such as those disclosed in U.S. Pat. No. 7,964,245 B2, for example, UV-absorbing polymers such as those cited in U.S. Pat. No. 7,008,618 B1, or substituted 2-hydroxyphenyl benzotriazoles that are linked, for example, by an ester group to a polymer, particularly to a polyvinyl acetal.

In particular, UV absorbers with a low tendency to migrate or diffuse cab be used, for example, Polyacrylene S1 by Hallstar, UV absorbers with ionic groups, UV-absorbing nanoparticles, or organic UV absorbers present as particles in the film matrix.

In another embodiment according to the present invention, the interlayer film is provided with a plurality of electrically conductive wires on at least one surface of the interlayer film.

In particular for vehicle windshields, there is high demand in the market for heating versions, in which the heating means must by nature be the least visible, or least obstructing for viewing, as possible. A coating of transparent conductive wires for resistive heating can fulfil this demand.

"Electrically conductive wires" shall mean discrete, electrically conductive structures that do not comprise flat layers but separately identifiable structures such as conductor tracks, wires, networks built with these tracks or wires, dots, and combinations thereof.

Preferably, the discrete electrically conductive structures comprise metals such as silver, copper, gold, indium, zinc, iron, and aluminum. Alternatively or in combination, semiconductor materials or carbon-based conductive materials, such as graphite, CNT (carbon nanotubes) or graphene, can be used.

The electrically conductive structures can be generated by different types of printing processes such as screen printing, flexoprinting or gravure printing, vapor deposition, sputtering, or electrodeposition on the surface of film A. In printing processes, corresponding inks are used which can be dried, or thermally or photonically cured before lamination.

In case of printing methods ("Printed Electronics"), the inks or printing colors used contain conductive particles. These may be particles composed of metals such as gold, silver, copper, zinc, iron or aluminum, as well as metal-coated materials such as silver plated glass fibers, glass beads and conductive carbon black, carbon nanotubes, graphite or graphene.

The electrically conductive structures can generally be used for electromagnetic shielding of frequency fields, for generating electrical circuits such as printed circuit tracks or transmitting and/or receiving antennas, as well as other functions. Heaters can, for instance, be incorporated in the glass composite, antennas can, for example, be used in the automotive sector for receiving radio waves or in car-to-car communication.

The electrically conductive structures of the laminates according to the invention can also be composed of touch sensors, which enables the production of interactive laminated glass panes. For example, information input to the laminated glass pane (for example, a windshield or side window of a car or the sliding glass of a door) can be used for access control.

In multilayer structures of electronic elements, i.e. conductive and dielectric structures, whole electronic circuits or components can be further applied. These include, inter alia, transistors, resistors, chips, sensors, displays, light emitting diodes (OLEDs, for example) and/or smart labels.

The electrically conductive structures may be so small that they can only be barely recognized with the naked eye. This happens at widths of 1 to 30 µm, preferably 1 to 20 µm, and most preferably 1 to 15 µm. In particular, in flat heating fields, the width of the filaments is less than 25 µm. Heating panels can also be applied only locally, on an upper surface of a windshield in front of an optical sensor system, for example.

Although there is no particular limitation on the degree of saponification of the acetate groups, it is preferably 95 mol% or more, more preferably 98 mol% or more, still more preferably 99 mol% or more, and most preferably 99.9 mol% or more.

Preferably, the percentage of ethylene units in the ethylene vinyl alcohol is 25 to 60 mol%, more preferably 30 to 55 mol%, and still more preferably 35 to 50 mol%.

Preferably, the percentage of ethylene units in the ethylene vinyl acetal is 25 to 60 mol%, more preferably 30 to 55 mol%, and still more preferably 35 to 50 mol%.

Preferably, the percentage of vinyl alcohol units in the ethylene vinyl acetal resin of the present invention is 24 to 71 mol% based on the total monomer units constituting the resin.

Preferably, the degree of acetalization of the ethylene vinyl acetal used in the present invention is from 1 mol% to 80 mol%, also preferably 5 mol% or more and less than 40 mol%, more preferably the lower limit of the degree of acetalization is more than 6 mol%, more than 7 mol%, more than 8 mol%, more than 9 mol%, and most preferably more than 10 mol%. Further, the upper limit of the degree of acetalization is more preferably 38 mol% or less, 36 mol% or less, 34 mol% or less, and 32 mol% or less in this order, and most preferably less than 30 mol%.

Preferably, the acetal groups individually have 1 to 7 carbon atoms, i.e. they derive from the condensation reaction with aldehydes with 1 to 7 carbon atoms. More preferably, they derive from the list consisting of methanal (formaldehyde), acetaldehyde, n-propanal (propionaldehyde), n-butanal (butyraldehyde), iso-butanal (2-methyl-1-propanal, iso-butyraldehyde), n-pentanal (valeraldeyhde), iso-pentanal (3-methyl-1-butanal), sec-pentanal (2-methyl-1-butanal), tert-pentanal (2,2,dimethyl-1-propanal), n-hexanal (capronaldehyde), iso-hexanal (2-methyl-1-pentanal, 3-methyl-1-pentanal, 4-methyl-1-pentanal), 2,2-dimethyl-1-butanal, 2,3-dimethyl-1-butanal, 3,3-dimethyl-1-butanal, 2-ethyl-1-butanal, n-heptanal, 2-methyl-1-hexanal, 3-methyl-1-hexanal, 4-methyl-1-hexanal, 5-methyl-1-hexanal, 2,2-dimethyl-1-pentanal, 3,3-dimethyl-1-pentanal, 4,4-dimethyl-1-pentanal, 2,3-dimethyl-1-pentanal, 2,4-dimethyl-1-pentanal, 3,4-dimethyl-1-pentanal, 2-ethyl-1-pentanal, 2-ethyl-2-methyl-1-butanal, 2-ethyl-3-methyl-1-butanal, 3-ethyl-2-methyl-1-butanal, cyclohexylaldehyde and benzaldehyde. Most preferably, they derive from the condensation reaction with iso-butyraldehyde or n-butyraldehyde.

Also preferably, the ethylene vinyl acetals are mixed acetals, i.e. they comprise at least two different acetal groups. In other words, the ethylene vinyl acetals as used in the invention comprise a first acetal group derived from the reaction of two hydroxyl groups of the respective ethylene vinyl alcohol with one aldehyde and at least a second acetal group derived from the reaction of two other hydroxyl groups of the respective ethylene vinyl alcohol with a second aldehyde, wherein the first aldehyde is different from the second aldehyde. The preferred aldehydes are the same as used for the acetals with one acetal group as listed above.

Preferably, the ethylene vinyl acetals used in the inventive process have a glass transition temperature (Tg) of equal to or higher than 30, 35, 40, 45, or 50ºC. Also preferably, they have a Tg of 90, 75, 70, 65, 60, 55 ºC. Also preferably, the ethylene vinyl acetals used in the inventive process have a Tg of 30 to 90 ºC, more preferably 35 to 75 ºC, most preferably of 40 to 55 ºC.

The glass transition temperature is determined by means of differential scanning calorimetry (DSC) in accordance with DIN 53765 using a heating rate of 10K/min at a temperature interval of minus 50 °C to 150 °C. A first heating ramp, followed by a cooling ramp, followed by a second heating ramp was used. The position of the glass transition temperature was established on the measurement curve associated with the second heating ramp in accordance with DIN 51007. The DIN midpoint (Tg DIN) was defined as the point of intersection of a horizontal line at half step height with the measurement curve. The step height was defined by the vertical distance of the two points of intersection of the middle tangent with the base lines of the measurement curve before and after glass transition.

The melting point (melt temperature, Tm) is determined by means of differential scanning calorimetry (DSC) in accordance with ISO 11357-3:2018.

The vinyl alcohol content and vinyl acetate content of ethylene vinyl acetals were determined in accordance with DIN ISO 3681 (Acetate content) and DIN ISO 53240 (PVA content). The vinyl acetal content can be calculated as the remaining portion from the sum of vinyl alcohol content and vinyl acetate content determined in accordance with DIN ISO 53401/53240 and the ethylene needed to make one hundred. The degree of acetalisation can be calculated from the amount of vinyl acetal content divided by the sum of vinyl alcohol content, vinyl acetal content and vinyl acetate content. Conversion from % by weight into mol % is achieved by formulas known to the person skilled in the art.

The ethylene content of the ethylene vinyl acetate copolymer is measured by NMR spectroscopy. First, the ethylene vinyl acetal resin is dissolved in ethanol and a 2 N hydrochloride hydroxylamine solution and hydrochloric acid are added, and the mixture is stirred under reflux with a condenser in a water bath for 4 hours, and after cooling, ammonia water is added. Afterwards, methanol is added and the polymer is precipitated, washed and dried to obtain the acetylated ethylene vinyl alcohol copolymer. Then, the acetylated ethylene vinyl alcohol copolymer is dissolved in DMSO (dimethyl sulfoxide) at 120 °C, cooled to room temperature, and then N,N-dimethyl-4-aminopyridine and acetic anhydride are added thereto, followed by stirring for 1 h, followed by precipitation with ion-exchanged water and acetone, and drying to obtain an ethylene vinyl acetate copolymer. The polymer is dissolved in DMSO-d6 and measured by a proton NMR spectrometer of 400 MHz. The spectrum obtained was integrated 256 times. The molar ratio of the ethylene unist of the ethylene vinyl alcohol copolymer is calculated from the intensity ratio of the methine proton (peak at 1.1 to 1.9 ppm) derived from the ethylene unit and the vinyl acetate unit, and the terminal methyl proton (peak at 2.0 ppm) derived from the vinyl acetate unit. Note that, since the ethylene unit is not affected by the acetalization reaction, the molar ratio (n) of the ethylene unit of the ethylene vinyl alcohol copolymer before the acetalization reaction is equal to the molar ratio (n) of the ethylene unit of the ethylene vinyl acetal resin obtained after the acetalization reaction.

Optionally, the interlayer film according to the present invention comprises, other than the ethylene vinyl acetal, up to 20% by weight (based on the total weight of the composition) of one or more plasticizers. Any compound known to plasticize ethylene vinyl acetals may be used. Preferred plasticisers are diesters of aliphatic diols, in particular of aliphatic polyether diols and/or polyether polyols with aliphatic carboxylic acids, preferably diesters of polyalkylene oxides, in particular diesters of diethylene glycol, triethylene glycol and tetraethylene glycol with aliphatic (C6-C10) carboxylic acids, preferably 2-ethyl butyric acid and n-heptanoic acid, also diesters of aliphatic or aromatic (C2-C18) dicarboxylic acids, preferably adipine, sebacine and phthalic acid, with aliphatic (C4-C12) alcohols, preferably dihexyl adipate, phthalates, trimellitates, phosphates, fatty acid esters, in particular triethylene glycol-bis-(2-ethyl butyrate), triethylene glycol ethyl hexanoate (3G8), aromatic carboxylic acid esters, in particular dibenzoates and/or hydroxycarboxylic acid esters.

Also optionally, the interlayer film according torn the present invention comprises other components than the ethylene vinyl acetals as described above. For example, it may contain antioxidants, optical brighteners, stabilisers, processing aids, organic or inorganic nanoparticles, pyrogenic silicic acid, silica, surface-active substances and/or rheological modifiers.

There is no particular limitation on the method of manufacturing the interlayer film. Specifically, a starting resin composition may be formed into a film by extrusion, blow molding, injection molding, solution casting or the like, preferably by extrusion. The resin temperature at the time of extrusion is preferably 170 to 250 °C, more preferably 180 to 240 °C, and still more preferably 190 to 230 °C. If the resin temperature becomes too high, the ethylene vinyl acetal resin undergoes partial decomposition.

The extrusion process can be followed by a mono- or biaxial stretching process in order to increase mechanical properties (Young's-Modulus, tensile strength). For this purpose the film is pre-heated to a temperature between the glass transition temperature and the melting temperature, particularly between the glass transition temperature and the cold crystallization temperature. The biaxial-stretching process can be performed simultaneously or by a two-step process. For a two-step process, the temperature in machine and transversal direction can be adjusted independently.

The stretching factor is below 4. The stretched film is heatset at a temperature between the cold crystallization temperature and the melting temperature.

The interlayer films according to the invention have a certain roughness on at least one surface in order to prevent the interlayer films adhering to each other, e.g. when the film is wound up to a roll, and to enhance the degassing property in a laminating step. Conventional methods can be used to provide said roughness. Examples thereof include a method of providing a melt fracture structure by adjusting the extrusion conditions or embossing the surface. As for the depth and shape of the emboss, conventionally known ones may be used.

A further aspect of the present invention concerns the use of the inventive interlayer film as adhesive film for laminated glass. Due to the low thickness of the inventive interlayer films, they are generally combined with a commercially available standard PVB interlayer film such as the Trosifol^{®} range of interlayers for laminated glass.

Yet another aspect of the present invention concerns a laminated glass comprising two sheets of glass combined by an adhesive film comprising at least one interlayer film according to the invention and at least one film containing a polyvinyl acetal and at least one plasticiser.

The at least one film containing a polyvinyl acetal is any plasticized PVB-film known in the art. It may contain a single plasticiser as well as mixtures of plasticisers both of different and identical composition. The term "different composition" refers to both the type of plasticiser and proportion thereof in the mixture. It may contain, in the starting state prior to lamination, at least 22 % by weight, such as 22.0 - 45.0 % by weight, preferably 25.0 - 32.0 % by weight and in particular 26.0 - 30.0 % by weight plasticiser.

The thickness of the at least one film containing a polyvinyl acetal in the starting state is 450 - 2500 µm, preferably 600 - 1000 µm, preferably 700 - 900 µm. A plurality of films B may be used in the invention either being stacked on each other or separated by the ethylene vinyl acetal film.

The laminated glass can be produced by inserting and laminating the interlayer film of the present invention as well as the at least one film containing a polyvinyl acetal between two or more sheets of glass made of inorganic glass or organic glass. Although there is no particular limitation on the glass to be laminated with the interlayer film for laminated glass of the present invention, a conventionally known organic glass such as polymethyl methacrylate or polycarbonate can be used in addition to an inorganic glass such as float glass, reinforced glass, netted glass, or heat ray absorbing plate glass. Although there is no particular limitation on the thickness of the glass, it is preferably 1 to 10mm, more preferably 2 to 6mm.

Laminating methods for obtaining the laminated glass described above are known in the art and examples thereof include a method using a vacuum laminator apparatus, a method using a vacuum bag, a method using a vacuum ring, and a method using a nip roll. Further, after temporary bonding, the method of throwing into the autoclaving step can also be performed additionally.

When a nip roll is used, for example, a method in which a first temporary adhesion is performed at a temperature lower than or close to the Tg. Specifically, there may be mentioned, for example, a method in which the mixture is heated to 30 to 70 °C by an infrared heater or the like, then degassed by a roll, and further heated to 50 to 120 °C, and then crimped by a roll to be bonded or temporarily bonded.

The autoclaving step, which is performed after the temporary bonding, is carried out for about 2 hours at a temperature of 130 to 145 °C, for example, under a pressure of about 1 to 1 5MPa, although depending on the thickness and configuration of the module and the laminated glass.

Yet another aspect of the present invention concerns the use of the interlayer film as hot melt for fabrics, wood, metals, ceramics or polymer fibres as well as composites comprising at least two fabric layers combined by at least one interlayer film according to the present invention, such as for examples personal protection gear like helmets and vests.

### Examples

### Example 1 - ethylene vinyl acetal

100 parts by weight of the ethylene vinyl alcohol copolymer synthesized according to the process described in Japanese Patent Application Laid-Open No. 2016-28139 containing 44 mol% of ethylene units (saponification degree: 99%) were dispersed in 315 parts by weight of 1-propanol and the temperature of the solution was raised to 60 °C with agitation. Afterwards, 40 parts by weight of 1M hydrochloric acid was added, followed by 16.7 parts by weight of n-butyraldehyde while maintaining the temperature at 60 °C. As the reaction proceeded, the ethylene vinyl alcohol copolymer dissolved and the reaction mixture became a homogeneous solution. After 36 hours, 6.4 parts by weight of sodium hydrogen carbonate was added to stop the reaction. After adding 500 parts by weight of 1-propanol to the reaction solution to make it uniform, it was added dropwise to 2000 parts by weight of water to precipitate a resin. Thereafter, the operation of filtration and washing with water was repeated three times, the resulting solid was vacuum dried at 60 °C for 8 hours. The ethylene vinyl acetal thus obtained has a content of ethylene units of 44 mol% and an acetalization degree of 31 mol%.

### Film production

The interlayer is produced from the resin obtained as described above by film extrusion using a Leistritz co-rotating double-screw extruder with a screw length of 592 mm and a length/ diameter (L/D) ratio of 32. The melt temperature during extrusion is between 180 and 240 °C. The film is extruded through a flat slit die with a slit width of 300 mm and cooled down by chill rolls, that have a surface temperature of 20 °C. The obtained film has a thickness of 50 µm.

### Viscosity and Modulus measurements

The films were compression-moulded with a hot press at 200 °C, a pressure of 50 bar and a residence time of 5 min. The obtained samples have a thickness of 0.7 mm and were pre-derided for 24 h in a vacuum oven at 50 °C.

The complex viscosity was measured in the linear range of deformation at 190 °C using a commercially available rheometer in plate/plate mode (Anton Paar MCR 302, plate dimeter 25 mm). The applied frequency range was 0.1 - 100 rad/s.

The storage modulus was measured using the same rheometer as for the viscosity measurements. The used geometry has a diameter of 8 mm. The frequency was set to 1 Hz and the heating rate to 2 K/min. The measurements were performed in the linear range of deformation.

The obtained film has a Haze value (acc. ASTM 1300) <1 and a yellowness db <1.

### Comparative Example 2

Mowital^{®} vinyl acetal resin B60T obtained from Kuraray Europe GmbH, which contains acetal units prepared only with n-butyraldehyd, is used for film extrusion as described above. No plasticizer was added.

### Comparative Example 3

Trosifol^{®} Extra Stiff film was obtained from Kuraray Europe GmbH. The commercially available product contains PVB and a plasticizer content of 17 %.

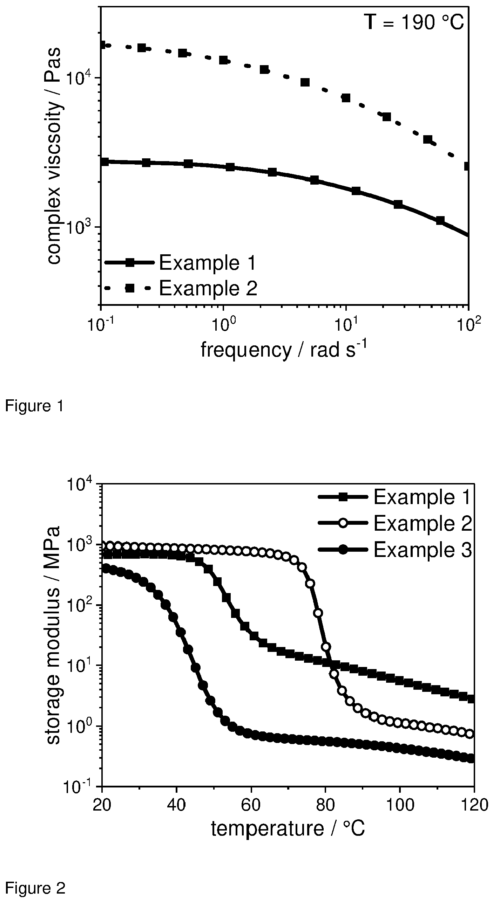

Figure 1 shows the complex viscosity as a function of frequency at a typical extrusion temperature of 190 °C. Comparative Example 2 shows a significant higher viscosity compared to the inventive Example 1. A high viscosity can cause the above mentioned problems. Figure 2 shows the shear storage modulus G' as a function of temperature T for the comparative Examples 2 & 3 and the inventive Example 1. The commercially available Trosifol^{®} Extra Stiff shows a strong drop of the modulus already around 40 °C (Example 3). This is caused by the high plasticizer amount of 17 % and is obstructive for a functionalisation step at higher temperatures (≥ 50 °C). The commercial available vinyl acetal resin Mowital^{®} B60T indicates superior high modulus values until approx. 80 °C. However, the high viscosity at extrusion temperature is of disadvantage. The inventive Example 1 combines the advantages of both comparative Examples - a high modulus over the temperature range between 20 and 100 °C and a low viscosity at extrusion temperature. This enables extrusion with superior optical properties and the processed film can be functionalized easily.

## Claims

1. An interlayer film comprising an ethylene vinyl acetal and optionally at least one plasticiser wherein the thickness of the interlayer film is from 5 to 95 µm.

2. The interlayer film according to claim 1 wherein the thickness of the interlayer film is from 10 to 75 µm, preferably 25 to 55 µm.

3. The interlayer film according to claim 1 or 2 wherein the ethylene vinyl acetal comprises ethylene units in the range of 25 to 60 mol%.

4. The interlayer film according to any one of the claims 1 to 3 provided with an obscuration area wherein the obscuration area is printed or coated onto at least one surface of the interlayer film or wherein the obscuration area is provided by a dye or a pigment dispersed in the interlayer film.

5. The interlayer film according to any one of the claims 1 to 4 wherein the obscuration area has at least one transparent area embedded herein.

6. The interlayer film according to any one of the claims 1 to 5 provided with IR shielding particles wherein the IR shielding particles are printed or coated onto at least one surface of the interlayer film or wherein the IR shielding particles are dispersed in the interlayer film.

7. The interlayer film according to any one of the claims 1 to 6 provided with a fluorophore wherein the fluorophore is printed or coated onto at least one surface of the interlayer film or wherein the fluorophore is dispersed in the interlayer film.

8. The interlayer film according to any one of the claims 1 to 7 provided with light scattering particles wherein the light scattering particles are printed or coated onto at least one surface of the interlayer film or wherein the light scattering particles are dispersed in the interlayer film.

9. The interlayer film according to any one of the claims 1 to 8 provided with a UV absorber wherein the UV absorber is printed or coated onto at least one surface of the interlayer film or wherein the UV absorber is dispersed in the interlayer film.

10. The interlayer film according to any one of the claims 1 to 9 provided with a plurality of electrically conductive wires on at least one surface of the interlayer film.

11. A process for the manufacturing of a laminated glass wherein the interlayer film according to any one of the claims 1 to 10 and a polyvinyl butyral film with a thickness of equal to or higher than 250 µm comprising a plasticizer is laminated between two sheets of glass.

12. The process according to claim 11 comprising a step of mono- or biaxial stretching of the interlayer film before lamination.

13. A laminated glass comprising two sheets of glass combined by an adhesive film comprising at least one interlayer film according to any one of claims 1 to 10.

14. Use of the interlayer film according to any one of the claims 1 to 10 as hot melt for fabrics, wood, metals, ceramics or polymer fibres.

15. A composite comprising at least two fabric layers combined by at least one interlayer film according to any one of the claims 1 to 10.
